# EUROPEAN PATENT SPECIFICATION

(11) **EP 1 142 695 B1**
(45) Date of publication and mention of the grant of the patent: **08.03.2006**
(21) Application number: 01303308.9
(22) Date of filing: 06.04.2001
(51) Int. Cl.: B29D 30/08, B29D 30/38, B29D 30/72

(54) **Method of producing pneumatic tires**
Verfahren zum Herstellen von Fahrzeugreifen
Procédé pour la confection de pneus

(30) Priority: 07.04.2000 JP 2000105864
(43) Date of publication of application: 10.10.2001
(73) Proprietor: Bridgestone Corporation, Tokyo (JP)
(72) Inventor: Iizuka, Shuhei, Kodaira City, Tokyo (JP)
(74) Representative: Whalley, Kevin

(56) References cited:
- EP-A- 0 340 147
- DE-A- 19 831 747
- US-A- 4 067 372
- US-A- 5 587 030
- PATENT ABSTRACTS OF JAPAN vol. 1995, no. 09, 31 October 1995 (1995-10-31) -& JP 07 149115 A (TOYO TIRE & RUBBER CO LTD), 13 June 1995 (1995-06-13)

## Description

The present invention relates to a method of producing a pneumatic tire having improved lateral rigidity and steering stability performance.

It is known that a tire generates a cornering force to counteract a centrifugal force acting on a vehicle upon cornering thereof, and a poor cornering force relative to the centrifugal force tends to cause lateral slips of the tire, resulting not only in problems when driving on a curved road at high speed, but also in spinning of the vehicle, as the case may be.

In order to increase the cornering force and thereby improve the steering stability performance of tires, it is desirable to improve the lateral rigidity of tires. Typically, the lateral rigidity of tires is improved (i) by increasing the modulus or volume of the bead filler rubber having a substantially triangular cross-section that extends from the bead core to the end of the tread portion, (ii) by increasing the end count of cords of the reinforcing cord layer or so-called "insert ply", that is arranged along the bead filler rubber in the region ranging from the bead portion to the side wall portion, and/or (iii) by increasing the number of sheets of insert plies. However, these measures are not always effective solutions from practical viewpoints.

Thus, for example, it is often difficult to extrude bead filler rubbers with increased modulus, thereby causing limitations in terms of production technology. Also, in terms of tire performances, the increased modulus of the bead filler rubbers make it difficult to realize a satisfactory damping performance of the tire, thereby deteriorating the riding comfort performance, or reducing the cornering force at a slip angle that exceeds the maximum cornering force. The reduced cornering force may result in a sudden change of the limiting behaviour characteristics of a vehicle upon cornering, or in spinning of the vehicle. Furthermore, an increased volume of the bead filler rubber brings about not only an increase in weight of the tire, but also elevation of the temperature at the bead portion during driving, thereby deteriorating the durability of the bead portion against heat generation.

Moreover, even an increased end count of the cords in the insert ply and/or an increased number of insert plies are still insufficient for satisfactorily achieving the desired steering stability performance since, when a lateral bending force acts on a tire that is affected by a slip angle, the insert ply on the compression side does not contribute to improve the rigidity, unlike the insert ply on the pulling side.

In order to improve the lateral rigidity of tires from another viewpoint, there has been proposed a rubber insert layer in which short fibers are embedded. Such a proposal is disclosed, e.g., in JP-A-6-192479, JP-A-7-18121, JP-A-8-108713, JP-A-10-315717, etc. It has been confirmed that the rubber insert layers with short fibers embedded therein serve to improve the lateral rigidity of tires satisfactorily, without the above-mentioned drawbacks of the prior art. However, the provision of such rubber insert layers requires an additional time for the molding operation besides that the molding operation itself is complicated, thereby reducing the productivity.

It is therefore an object of the present invention to eliminate these problems and provide a method for producing tires, that can be carried out with simplified operations and with high productivity, while realizing the required lateral rigidity and steering stability performance of the tire.

According to the present invention, there is provided a method of producing a pneumatic tire comprising a pair of bead portions, a pair of side wall portions extending from the respective bead portions, a tread portion between the side wall portions, a radial carcass ply toroidally extending between the bead portions for reinforcing the side wall portions and the tread portion, reinforcing layers arranged in side surface areas of the tire extending from the bead portions to the side wall portions, respectively; and an inner liner rubber, wherein the method comprises the steps of:
- forming said reinforcing layer as an annular laminated body, by spirally winding and laminating a ribbon of an unvulcanized rubber having a thin gauge and embedding short fibers therein; and
- applying the annular laminated body at a position corresponding to a side surface area of the tire, between an outer rubber and the inner liner rubber, upon formation of a green tire for the tire to be produced.

The above-mentioned method of the present invention can be carried out carried out with simplified operations and with high productivity, without the problems of the prior art. Moreover, the tire produced by the method of the present invention includes, on each side surface area, an annular laminated body made of a ribbon embedding short fibers that are arranged with a desired orientation. Thus, when the short fibers in the annular laminated body are oriented in the circumferential direction of the tire, it is readily possible to realize a highly improved lateral rigidity and an excellent steering stability performance without deteriorating the riding comfort.

The annular laminated body may be applied along, and adhered to at least one side of the carcass ply. Additionally, the annular laminated body may be applied along, and adhered to at least one side of a bead filler rubber. Alternatively, the annular laminated body may be applied to form at least a part of the bead filler rubber.

The annular laminated body may be preformed by supplying the ribbon from an extruder to a rotating carrier, so that the preformed annular laminated body is applied along, and adhered to the carcass ply and/or a side surface of a bead filler rubber. The performing of the annular laminated body is advantageously preformed during the period in which a green tire is being vulcanized, in order to minimize the loss time.

Alternatively, the annular laminated body may be formed, *in situ*. In this instance, the ribbon may be supplied from an extruder onto a rotating carrier on which the green tire is formed, and laminated and applied along, and adhered to the carcass ply and/or a side surface of a bead filler rubber, thereby forming the annular laminated body.

Advantageously, the ribbon is applied so that said short fibers are oriented in the circumferential direction of the tire. In this instance, the ribbon is preferably extruded from a positive displacement type extruder.

Alternatively, however, the ribbon may be applied so that said short fibers are randomly oriented in the reinforcing layer of the tire. In this instance, the ribbon may be extruded from a screw type extruder.

The present invention will be described hereinafter with reference to some preferred embodiments shown in the accompanying drawings, in which:
FIG. 1 is a sectional view showing a tire produced by the method according to the present invention;
FIG. 2 is a sectional view showing a green tire corresponding to the product tire of FIG. 1;
FIG. 3 is a sectional view showing a tire produced by the method according to a modified embodiment of the present invention;
FIG. 4 is a sectional view showing a green tire corresponding to the product tire of FIG. 3;
FIG. 5 is a sectional view showing an annular laminated body that may be used in accordance with the present invention;
FIGS. 6 to 8 are sectional views of green tires showing various arrangements of the annular laminated body;
FIG. 9 is a perspective view showing one example of positive displacement type extruder that may be used for forming the annular laminated body in the method according to the present invention;
FIG. 10 is a side view showing another example of positive displacement type extruder that may be used for forming the annular laminated body, *in situ,* in the method according to the present invention; and
FIG. 11 is a side view showing a part of FIG. 10 in enlarged scale.

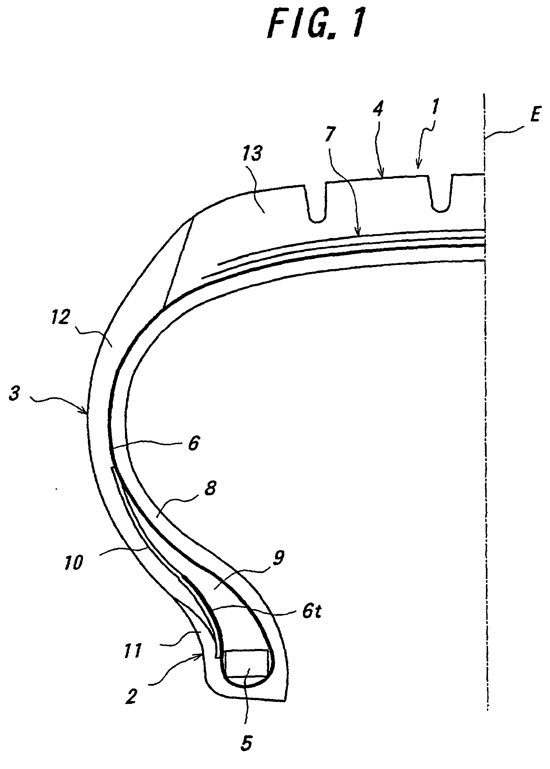

With reference to FIG. 1, there is shown a pneumatic radial tire produced by the method according to the present invention, which is designated as a whole by reference numeral 1. The tire 1 includes a pair of bead portions 2, a pair of side wall portions 3 and a tread portion 4, wherein bead cores 5 are embedded in the bead portions 2, respectively. The tire 1 further includes a radial carcass ply 6 extending toroidally between the bead cores 5, belt layers 7 arranged on the outer side of the carcass ply 6, and an inner liner rubber 8 arranged on the inner side of the carcass ply 6.

In the illustrated embodiment, the bead cores 5 are each comprised of an ordinary core about which a turnup portion 6t is formed by the carcass ply 6 to extend axially from the inner side to the outer side of the tire 1. The carcass ply 6 is comprised of suitable rubber-coated organic fiber cords, such as nylon cords, polyester cords, rayon cords, etc. The belt layers 7 are comprised of at least two crossed layers of rubber-coated steel cords.

For the tires 1 to be produced by the method according to the present invention, an alternative arrangement may be adopted wherein the bead cores 5 are each comprised of a pair of strip-like core rings that are arranged side-by-side so that the carcass 6 is clamped therebetween without forming the turnup portion, and/or the carcass ply 6 is comprised of steel cords.

On each side of the tire 1, a bead filler rubber 9 and a reinforcing layer 10 are arranged in the side surface region of the tire that extends from the bead portion 2 to the side wall rubber portion 3. The bead filler rubber 9 has a generally triangular cross section and extends from the outer periphery of the bead core 5 toward the end of the tread rubber portion 4. The reinforcing layer 10 is comprised of an annular laminated body, the details of which will be given hereinafter. It is noted, however, that the reinforcing member 10 in the embodiment of FIG. 1 is applied to the outer side of the bead filler 9 and also applied to at least part of the outer side of the bead core 5. The side surfaces of the tire 1 are each formed by a rubber chafer 11 around the bead portion 2, a side wall rubber 12 and a portion of a tread rubber 13.

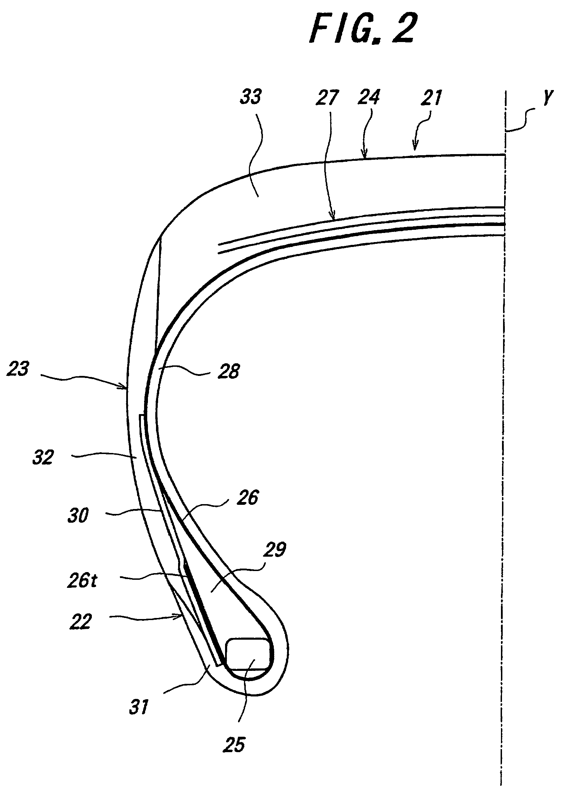

A green tire 21 is shown in FIG. 2, and has a shape approximating the product tire 1 that is obtained after vulcanization of the green tire 21. Thus, the green tire 21 includes a pair of bead portion areas 22, a pair of side wall portion areas 23 and a tread portion area 24, which correspond to the bead portions 2, the side wall portions 3 and the tread portion 4 of the product tire 1, respectively. The green tire 21 further includes bead cores 25 embedded in the bead portion area 22, a radial carcass ply 26 toroidally extending between the bead cores 25, belt layers 27 arranged on the outer side of the carcass ply 26, an inner liner rubber 28 arranged on the inner side the carcass ply 26, bead filler rubbers 29 each extending from the outer side of the bead core 25 toward the end of the tread portion area 24, and a reinforcing layer 30. The side surfaces of the green tire 21 are each formed by a rubber chafer 31 around the bead portion area 22, a side wall rubber 32 and a portion of a tread rubber 33. The above-mentioned rubber members in the green tire 21 are still in unvulcanized state.

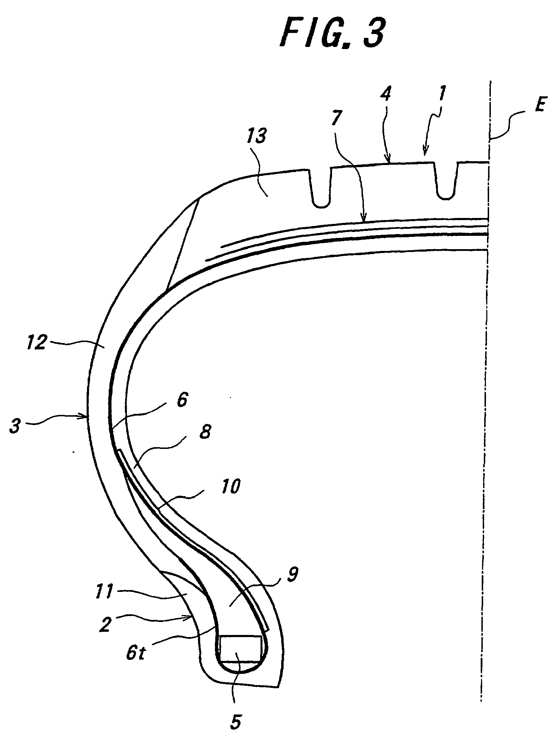

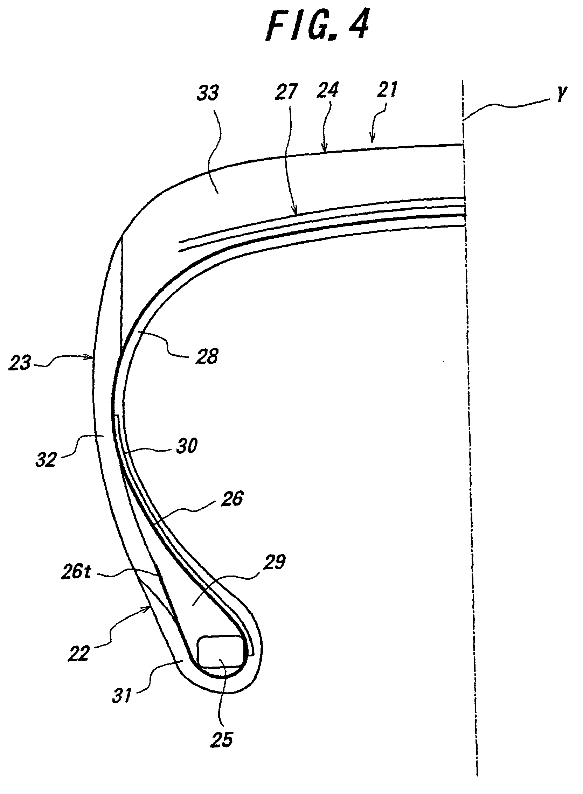

A slightly modified pneumatic tire is shown in FIG. 3, which is also produced by the method according to the present invention. The tire 1 shown in FIG. 3 has essentially the same structure as that of FIG. 1, but differs therefrom in that the reinforcing member 10 is applied to the inner side of the carcass ply 6 and the bead filler 9. The tire 1 shown in FIG. 3 is obtained by vulcanizing a green tire 21 that is shown in FIG. 4.

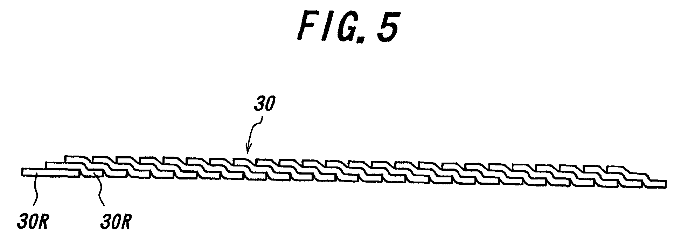

With reference to FIG. 5 showing the cross-section as can be seen in a radial plane of the green tire 21, the reinforcing layer 30 in the green tire 21 is in the form of an annular laminated body that is formed by spirally winding and laminating a ribbon 30R of unvulcanized rubber embedding short fibers therein. The annular laminated body 30 is applied to the position of the green tire 21 corresponding to the side surface areas of the tire 1, between the outer rubber formed of the rubber chafers 11 and the side wall portion 12, on one hand, and the inner liner rubber 8, on the other hand. Preferably, the ribbon 30R has a thin gauge within a range of 0.3 mm to 1.2 mm, and a narrow width within a range of 5 mm to 20 mm. The ribbon 30R can be highly efficiently and precisely extruded from a positive displacement type extruder or a screw extruder, which can be operated under an automatic control, and the annular laminated body 30 may be either preformed or formed, *in situ*, upon formation of the green tire 21 in a simple manner and with a high productivity.

The short fibers of the ribbon 30R may be randomly arranged in the ribbon 30R, or oriented in the longitudinal direction of the ribbon 30R. In the latter case, in particular, the annular laminated body 30 forming the reinforcing layer 10 of the tire 1 at its side surface area effectively improves the lateral rigidity of the tire 1 and, hence, the steering stability performance, and also makes it possible to readily and precisely control the steering stability performance including the ride comfort.

The unvulcanized rubber of the ribbon 30R includes natural rubber (NR), polyisoprene rubber (IR), styrene butadiene copolymer rubber (SBR), butadiene rubber (BR), butyl rubber (IIR), halogenated butyl rubber (X-IIR, X: CI, Br), chloroprene rubber (CR), ethylene-propylene-diene rubber (EPDM), etc., either alone or in admixture.

As the short fibers, there may be used polyamide fibers such as nylon fibers, aramid fibers typically known as Kevlar fibers, polyester fibers such as polyethylene terephthalate fibers or polyethylene naphthalate fibers, or organic fibers such as rayon fibers. Alternatively, the short fibers may be comprised of wire filaments that are typically used for tire steel cords.

The unvulcanized rubber of the ribbon 30R may contain known chemical binder such as novolak-type modified phenol resin, in the case of the above-mentioned organic fibers, and cobalt naphthenate or the like, in the case of the above-mentioned wire filaments, and may further contain additives generally used in the industry, such as carbon black, sulfur, vulcanization accelerator, antioxidant, process oil, zinc white, etc.

The annular laminated body 30 forming the reinforcing layer of the green tire 21 may be arranged along the outer side and/or inner side of the major part of the carcass ply 26, which does not include the turnup portion 26t. Thus, the annular laminated body 30 of the green tire 21 shown in FIG. 2 and FIGS. 6 to 8 is arranged along the outer side of the carcass ply 26, and the annular laminated body 30 of the green tire 21 shown in FIG. 4 is arranged on the inner side of the carcass ply 26. Furthermore, the annular laminated body 30 of the green tire 21 shown in FIG. 2 is arranged on the outer side of the turnup portion 26t, and the annular laminated body 30 of the green tire 21 shown in FIG. 4 and FIGS. 6 to 8 is arranged on the inner side of the turnup portion 26t.

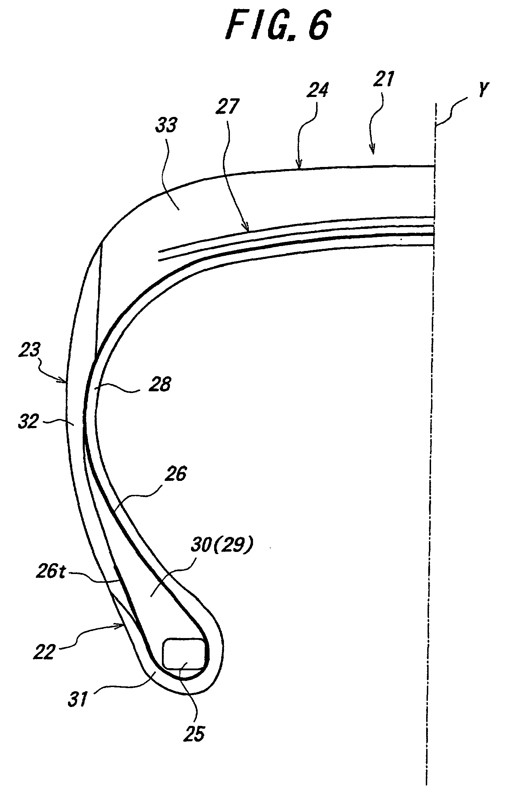

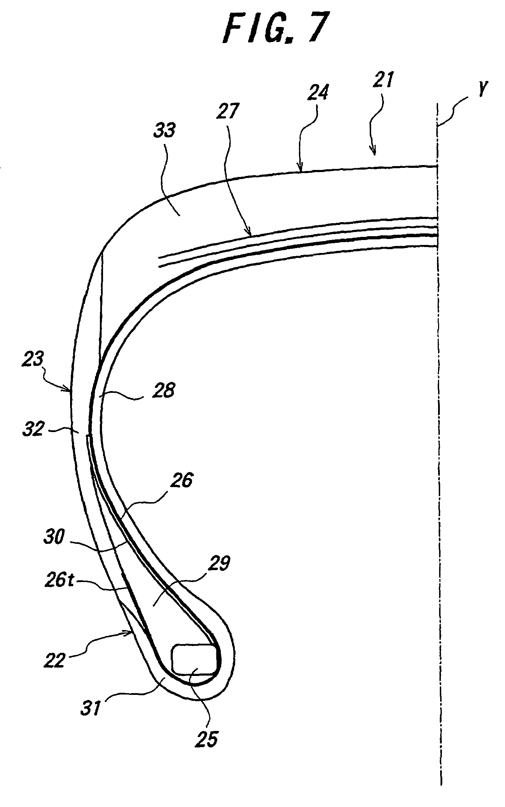

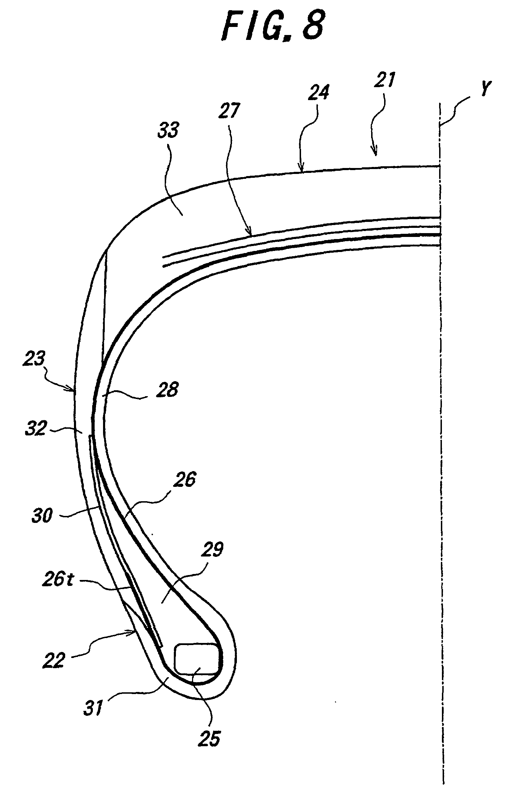

Also, the annular laminated body 30 may be arranged along the outer side and/or inner side of the bead filler rubber 29. Thus, the annular laminated body 30 of the green tires 21 shown in FIGS. 2 and 8 is arranged along the outer side of the bead filler rubber 29, and the annular laminated body 30 of the green tire 21 shown in FIGS. 4 and 7 is arranged along the inner side of the bead filler rubber 29. Alternatively, the annular laminated body 30 may be applied to form at least part of the bead filler rubber 29, as shown in FIG. 6.

The annular laminated body 30 may be preformed in advance, and applied to a desired position during formation of a green tire. Alternatively, the annular laminated body 30 may be formed and applied, *in situ*, during formation of a green tire.

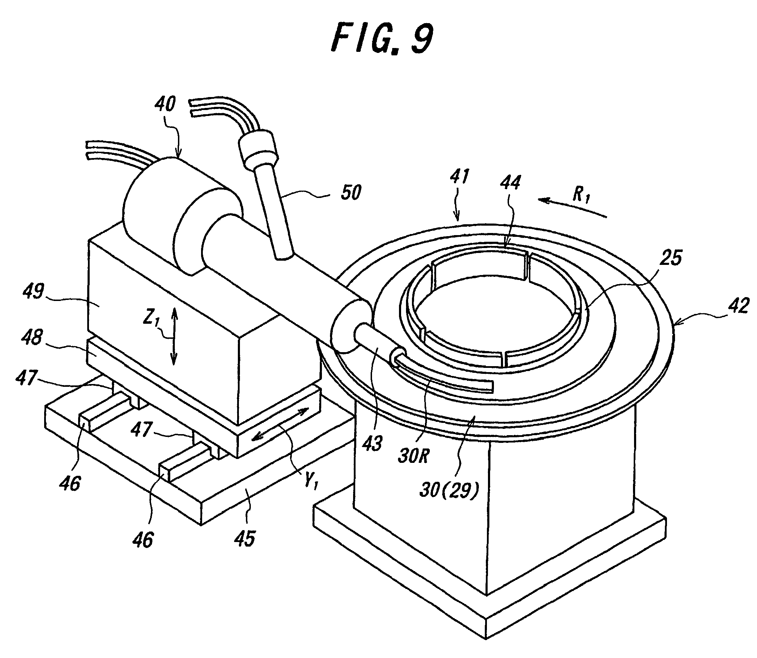

In order to preform the annular laminated body 30, as shown in FIG. 9, a positive displacement type extruder 40 is advantageously used in combination with a carrier device 41 that includes a rotatable carrier 42 in the form of a disk. The ribbon 30R having a thin gauge is continuously extruded from an extrusion nozzle 43 of the extruder 40 and supplied onto the carrier 42 under a continuous rotation about a vertical axis in the direction of an arrow R₁, to thereby form the annular laminated body 30 having a required cross-sectional shape as shown in FIG. 5. By way of example, the preformed annular laminated body 30 shown in FIG. 9 also forms the bead filler rubber 29 of the green tire 21 shown in FIG. 6. Thus, during the rotation of the carrier 42, the ribbon 30R is continuously supplied and moved radially outwards and thereby successively laminated from the outer peripheral surface of the bead core 25 that is fixedly held in place from the inner side by a radially expansible clamp 44. There may be instances in which the ribbon 30R has to be moved back radially inwards in order to obtain a required gauge. The laminating operation is continued until the predetermined cross-sectional shape of the preformed annular laminated body 30 is achieved.

It is preferred that the positive displacement type extruder 40 can be moved back and forth relative to the carrier 42 in two axial directions, including a horizontal direction indicated by arrow Y₁, that is perpendicular to the rotating axis of the carrier 42, and a vertical direction indicated by arrow Z₁, that is parallel to the rotating axis of the carrier 42. The extruder 40 shown in FIG. 9 is provided with a pair of slide bearings 47 which are guided by, and slidable along a pair of guide rails 46 on a base 45, a movable table 48 to which the slide bearings 47 are secured, and an elevating stand 49 which is mounted on the movable table 48. The movable table 48 and the elevating stand 49 are associated with respective servomotors, not shown, for controlling the movement of the carrier 42 in the two axial directions Y₁ and Z₁. The blended material of unvulcanized rubber and the short fibers for the ribbon 30R are supplied to the extruder 40 through a hopper 50.

The above-mentioned combination of the positive displacement type extruder 40 and the rotatable carrier 42 can be used advantageously, to preform the annular laminated body 30 of the green tire 21 shown in FIGS. 2, 7 and 8, as well. Use of a positive displacement type extruder 40, such as that shown in FIG. 9, is highly suitable when, in particular, it is desired that the short fibers in the ribbon 30 are oriented in the extruding direction and, hence, in the circumferential direction of the annular laminated body 30. However, it is also possible to use a small sized extruder of a single screw type (not shown), when it is desired that the short fibers are relatively randomly arranged in the ribbon 30. The preforming of the annular laminated body 30 is preferably carried out during the period in which the green tire is subjected to vulcanization, in order to minimize the loss time.

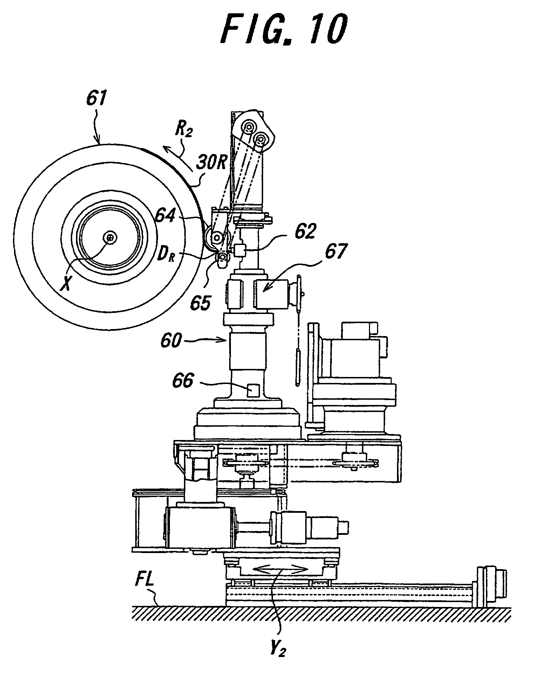

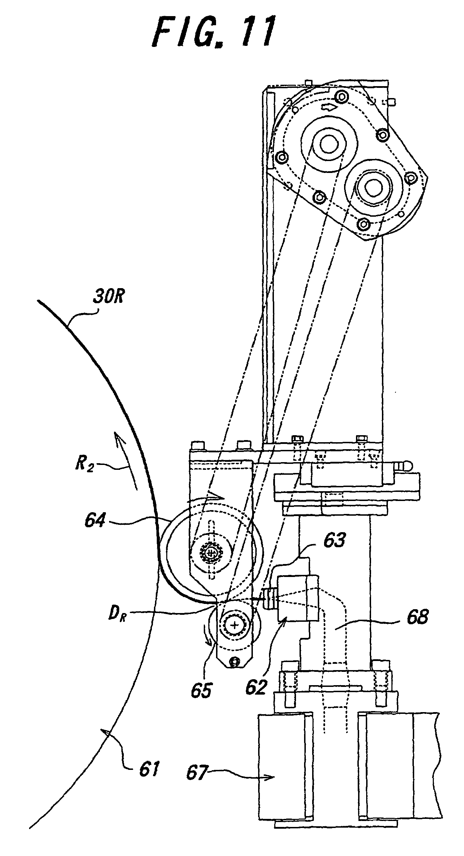

On the other hand, in order to form the annular laminated body 30, *in situ*, as shown in FIGS. 10 and 11, an extruder 60 is used in combination with a carrier 61 that is rotatable about a horizontal axis X. The extruder 60 is installed on a floor surface FL and is used for continuously extruding the ribbon 30R having a thin gauge, from an extruding die 63 at the tip end portion of an extruding head 62. The ribbon 30R extruded from the extruder 60 is supplied, via a pair of guide rollers 64, 65, directly to the desired portion of a green tire that is being formed on the carrier 61 rotating in the direction of arrow R₂. Thus, the ribbon 30R is laminated to form the annular laminated body 30 having the required cross-sectional shape, on the green tire which is being formed on the carrier 61. The extruder 60 is supplied with a blended material of unvulcanized rubber and short fibers, from a port 66.

It is preferred that the extruder 60 is a positive displacement type extruder, when the short fibers in the reinforcing layer of the tire are oriented in the circumferential direction. In the embodiment shown in FIG. 10, the extruder 60 thus includes a gear pump 67 at an extruding tip end portion so that the blended material is positively displaced from the gear pump 67 and supplied to the extruding head 62 via an inner flow passage 68.

The guide rollers 64, 65 arranged in a pair constitute a roller die D_{R} at their opposite surfaces for precisely defining the predetermined cross-sectional shape of the ribbon 30R having a thin gauge, without causing a so-called die swelling. It is assumed that the distance between the guide rollers 64, 65 can be adjusted, if necessary. The roller 64 also serves as a pressure roller for adhering the ribbon 30R onto the desired portion of the green tire being formed on the carrier 61, under suitable tension and pressure.

It is assumed that the extruder 60 can be moved back and forth in the directions indicated by double arrow Y₂ in FIG. 10, which is perpendicular to the rotating axis of the carrier 61. Thus, the extruder 60 can be moved toward the carrier 61 during the operation, and away therefrom when it is out of operation. The extruder 60 during the operation can be moved also in the axial directions, parallel to the rotating axis X of the carrier 61. Advantageously, the operation of the extruder 60 is automatically controlled, with the movement of the extruder 60 controlled by appropriate servomotors, not shown.

As described above, the method according to the present invention can be carried out with simplified operations and with high productivity, without the problems of the prior art. Moreover, the tire 1 produced by the method according to the present invention includes an annular laminated body made of a ribbon embedding short fibers that are arranged with a desired orientation. When, in particular, the short fibers in the annular laminated body are oriented in the circumferential direction of the tire, it is readily possible to realize a highly improved lateral rigidity and an excellent steering stability performance without deteriorating the riding comfort.

While the present invention has been described above with reference to certain preferred embodiments, it is of course possible that various changes and/or modifications may be made without departing from the scope of the invention as defined by the appended claims.

## Claims

1. A method of producing a pneumatic tire (1) comprising a pair of bead portions (2), a pair of side wall portions (3) extending from the respective bead portions, a tread portion (4) between the side wall portions, a radial carcass ply (6) toroidally extending between the bead portions for reinforcing the side wall portions and the tread portion, reinforcing layers (10) arranged in side surface areas of the tire extending from the bead portions to the side wall portions, respectively, and an inner liner rubber (8), **characterized in that** the method comprises the steps of:
- forming said reinforcing layer (10) as an annular laminated body, by spirally winding and laminating a ribbon (30R) of an unvulcanized rubber having a thin gauge and embedding short fibers therein; and
- applying the annular laminated body at a position corresponding to a side surface area of the tire, between an outer rubber (12) and the inner liner rubber (8), upon formation of a green tire for the tire to be produced.

2. A method as claimed in claim 1, **characterized in that** said annular laminated body is applied along, and adhered to at least one side of said carcass ply (6).

3. A method as claimed in claim 1 or 2, **characterized in that** said annular laminated body is applied along, and adhered to at least one side of a bead filler rubber (9).

4. A method as claimed in claim 1, **characterized in that** said annular laminated body is applied to form at least a part of a bead filler rubber (9).

5. A method as claimed in any of claims 1 to 4, **characterized in that** said annular laminated body is performed by supplying the ribbon (30R) from an extruder (40;60) to a rotating carrier (42;61), and said preformed annular laminated body is applied along, and adhered to the carcass ply (6) and/or a side surface of a bead filler rubber (9).

6. A method as claimed in any of claims 1 to 4, **characterized in that** said ribbon (30R) is supplied from an extruder (40;60) onto a rotating carrier (42;61) on which the green tire is formed, and laminated and applied along, and adhered to the carcass ply (6) and/or a side surface of a bead filler rubber (9), thereby forming the annular laminated body.

7. A method as claimed in any of claims 1 to 6, **characterized in that** said ribbon (30R) is applied so that said short fibers are oriented in the circumferential direction of the tire.

8. A method as claimed in any of claims I to 7, **characterized in that** said ribbon (30R) is extruded from a positive displacement type extruder (40;60).

9. A method as claimed in any of claims 1 to 6, **characterized in that** said ribbon (30R) is applied so that said short fibers are randomly oriented in the reinforcing layer (10) of the tire.

10. A method as claimed in claim 9, **characterized in that** said ribbon (30R) is extruded from a screw type extruder.

## Patentansprüche

1. Verfahren zum Herstellen eines Luftreifens (1), der ein Paar von Wulstabschnitten (2), ein Paar von Seitenwandabschnitten (3), die sich von den jeweiligen Wulstabschnitten erstrecken, einen Laufflächenabschnitt (4) zwischen den Seitenwandabschnitten, eine Radialkarkassenschicht (6), die sich kreisringförmig zwischen den Wulstabschnitten erstreckt, um die Seitenwandabschnitte und den Laufflächenabschnitt zu verstärken, Verstärkungslagen (10), die in Seitenflächenbereichen des Reifens angeordnet sind, die sich jeweils von den Wulstabschnitten zu den Seitenwandabschnitten erstrecken, und einen inneren Auskleidungsgummi (8) umfaßt, **dadurch gekennzeichnet, daß** das Verfahren die folgenden Schritte umfaßt:
Formen der Verstärkungslage (10) als ringförmigen laminierten Körper, durch spiralförmiges Wickeln und Laminieren eines Bandes (30R) aus einem nicht vulkanisierten Gummi, das eine dünne Stärke hat, und Einbetten kurzer Fasern darin, und
Aufbringen des ringförmigen laminierten Körpers an einer Position, die einem Seitenflächenbereich des Reifens entspricht, zwischen einem äußeren Gummi (12) und dem inneren Auskleidungsgummi (8), nach dem Formen eines Reifenrohlings für den zu erzeugenden Reifen.

2. Verfahren nach Anspruch 1, **dadurch gekennzeichnet, daß** der ringförmige laminierte Körper längs wenigstens einer Seite der Karkassenschicht (6) aufgebracht und an dieselbe geklebt wird.

3. Verfahren nach Anspruch 1 oder 2, **dadurch gekennzeichnet, daß** der ringförmige laminierte Körper längs wenigstens einer Seite eines Kernreitergummis (9) aufgebracht und an denselben geklebt wird.

4. Verfahren nach Anspruch 1, **dadurch gekennzeichnet, daß** der ringförmige laminierte Körper so aufgebracht wird, daß er wenigstens einen Teil eines Kernreitergummis (9) bildet.

5. Verfahren nach einem der Ansprüche 1 bis 4, **dadurch gekennzeichnet, daß** der ringförmige laminierte Körper ausgeführt wird durch Zuführen des Bandes (30R) von einem Extruder (40; 60) zu einem sich drehenden Träger (42; 61), und der ringförmige laminierte Körper längs der Karkassenschicht (6) und/oder einer Seitenfläche eines Kernreitergummis (9) aufgebracht und an dieselben geklebt wird.

6. Verfahren nach einem der Ansprüche 1 bis 4, **dadurch gekennzeichnet, daß** das Band (30R) von einem Extruder (40; 60) auf einen sich drehenden Träger (42; 61) zugeführt wird, auf dem der Reifenrohling hergestellt wird, und längs der Karkassenschicht (6) und/oder einer Seitenfläche eines Kernreitergummis (9) laminiert und aufgebracht und an dieselben geklebt wird, wodurch der ringförmige laminierte Körper geformt wird.

7. Verfahren nach einem der Ansprüche 1 bis 6, **dadurch gekennzeichnet, daß** das Band (30R) so aufgebracht wird, daß die kurzen Fasern in der Umfangsrichtung des Reifens ausgerichtet werden.

8. Verfahren nach einem der Ansprüche 1 bis 7, **dadurch gekennzeichnet, daß** das Band (30R) aus einem Verdrängungsextruder (40; 60) extrudiert wird.

9. Verfahren nach einem der Ansprüche 1 bis 6, **dadurch gekennzeichnet, daß** das Band (30R) so aufgebracht wird, daß die kurzen Fasern zufällig in der Verstärkungslage (10) des Reifens ausgerichtet werden.

10. Verfahren nach Anspruch 9, **dadurch gekennzeichnet, daß** das Band (30R) aus einem Schneckenextruder extrudiert wird.

## Revendications

1. Procédé de production d'un bandage pneumatique (1), comprenant une paire de parties de talon (2), une paire des parties de flanc (3) s'étendant à partir des parties de talon respectives, une partie de bande de roulement (4) entre les parties de flanc, une nappe de carcasse radiale (6) s'étendant toroïdalement entre les parties de talon pour renforcer les parties de flanc et la partie de bande de roulement, des couches de renforcement (10) agencées dans les régions des surfaces latérales du bandage pneumatique, s'étendant respectivement des parties de talon vers les parties de flanc, et une gomme de revêtement interne (8), **caractérisé en ce que** le procédé comprend les étapes ci-dessous:
formation de ladite couche de renforcement (10) sous forme d'un corps annulaire stratifié, par enroulement en spirale et stratification d'un ruban (30R) de gomme non vulcanisée à épaisseur réduite et comportant de courtes fibres qui y sont noyées; et
application du corps annulaire stratifié au niveau d'une position correspondant à la région de surface latérale du bandage pneumatique, entre une gomme externe (12) et la gomme de revêtement interne (8), lors de la formation d'un bandage pneumatique cru pour le bandage pneumatique devant être produit.

2. Procédé selon la revendication 1, **caractérisé en ce que** ledit corps annulaire stratifié est appliqué le long d'au moins un côté de ladite nappe de carcasse (6) et adhéré sur celui-ci.

3. Procédé selon les revendications 1 ou 2, **caractérisé en ce que** ledit corps annulaire stratifié est appliqué le long d'au moins un côté d'une gomme de bourrage sur tringle (9) et adhéré sur celui-ci.

4. Procédé selon la revendication 1, **caractérisé en ce que** ledit corps annulaire stratifié est appliqué de sorte à constituer au moins une partie d'une gomme de bourrage sur tringle (9).

5. Procédé selon l'une quelconque des revendications 1 à 4, **caractérisé en ce que** ledit corps annulaire stratifié est produit en amenant le ruban (30R) à partir d'une extrudeuse (40; 60) vers un support rotatif (42; 61), ledit corps annulaire préformé étant appliqué le long de la nappe de carcasse (6) et/ou d'une surface latérale d'une gomme de bourrage sur tringle (9) et adhéré sur ceux-ci.

6. Procédé selon l'une quelconque des revendications 1 à 4, **caractérisé en ce que** ledit ruban (30R) est appliqué à partir d'une extrudeuse (40; 60) sur un support rotatif (42; 61) sur lequel le bandage pneumatique cru est formé, et stratifié et appliqué le long de la nappe de carcasse (6) et/ou d'une surface latérale d'une gomme de bourrage sur tringle (9), et adhéré sur celles-ci, pour former ainsi le corps annulaire stratifié.

7. Procédé selon l'une quelconque des revendications 1 à 6, **caractérisé en ce que** ledit ruban (30R) est appliqué de sorte que lesdites fibres courtes sont orientées dans la direction circonférentielle du bandage pneumatique.

8. Procédé selon l'une quelconque des revendications 1 à 7, **caractérisé en ce que** ledit ruban (30R) set extrudé à partir d'une extrudeuse du type volumétrique (40; 60).

9. Procédé selon l'une quelconque des revendications 1 à 6, **caractérisé en ce que** ledit ruban (30R) est appliqué de sorte que lesdites fibres courtes sont orientées de manière aléatoire dans la couche de renforcement (10) du bandage pneumatique.

10. Procédé selon la revendication 9, **caractérisé en ce que** ledit ruban (30R) est extrudé à partir d'une extrudeuse du type à vis.
